# EUROPÄISCHE PATENTANMELDUNG

(11) **EP 4 704 196 A1**
(43) Veröffentlichungstag der Anmeldung: **04.03.2026**
(21) Anmeldenummer: 24196554.0
(22) Anmeldetag: 26.08.2024
(51) Int. Cl.: H01M 10/04, H01M 50/107, H01M 50/152, H01M 10/54

(54) **ELEKTROCHEMISCHES ENERGIESPEICHERELEMENT**

(71) Anmelder: VARTA Microbattery GmbH, 73479 Ellwangen Jagst (DE)
(72) Erfinder: Ensling, David, 73479 Ellwangen (DE)
(74) Vertreter: Ostertag & Partner Patentanwälte mbB

(57) **Zusammenfassung**

Ein elektrochemisches Energiespeicherelement (12) weist einen Wickelverbundkörper (10) auf, der eine spiralförmige Struktur aus mindestens zwei spiralförmig um eine Wickelachse gewickelten Elektrodenbändern (14, 24) und mindestens einem zwischen den Elektrodenbändern (14, 24) angeordneten Separatorband (38, 40) aufweist. Der hohlzylindrisch geformte Wickelverbundkörper (10) umfasst zwei endständige Stirnseiten (34, 36) und einen axial ausgerichteten Hohlraum (46) im Zentrum des Wickelverbundkörpers (10). In dem Hohlraum (46) ist ein Wickelkern (50) angeordnet. Um die Sicherheit des Energiespeicherelements (12) zu erhöhen, ist an zumindest einer der beiden endständigen Stirnseiten (36) des Wickelverbundkörpers (10) ein Ankerteil (52) angeordnet, das mit dem Wickelkern (50) verbunden ist. Das Ankerteil (52) kragt zumindest bereichsweise vom axialen Zentrum des Wickelverbundkörpers (10) lateral über die Stirnseite (36) des Wickelverbundkörpers (10) aus.

## Beschreibung

### HINTERGRUND DER ERFINDUNG

### 1. Gebiet der Erfindung

Die vorliegende Erfindung betrifft ein elektrochemisches Energiespeicherelement mit einem zylindrischen Gehäuse und einem hohlzylindrisch geformter Wickelverbundkörper sowie ein Verfahren zur Herstellung eines derartigen elektrochemischen Energiespeicherelements.

### 2. Beschreibung des Standes der Technik

Die einfachste Form eines elektrochemischen Energiespeicherelements ist die elektrochemische Energiespeicherzelle. Unter einer elektrochemischen Energiespeicherzelle im Sinne der vorliegenden Anmeldung wird eine elektrochemische Zelle verstanden, die mindestens eine positive und mindestens eine negative Elektrode, welche über einen ionenleitenden Elektrolyten miteinander verbunden sind, umfasst. In einer solchen Energiespeicherzelle findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Die räumliche Trennung wird dabei oft von einem zwischen den Elektroden angeordneten Separator gewährleistet.

Bei der Entladung werden an der negativen Elektrode durch einen Oxidationsprozess Elektronen freigesetzt, resultierend in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden lonenstrom innerhalb der elektrochemischen Zelle. Dieser wird durch den ionenleitenden Elektrolyten gewährleistet.

In sekundären (wieder aufladbaren) elektrochemischen Energiespeicherzellen ist die Entladereaktion reversibel, es besteht also die Möglichkeit, die bei der Entladung erfolgte Umwandlung chemischer Energie in elektrische Energie umzukehren.

Werden im Zusammenhang mit sekundären elektrochemischen Energiespeicherzellen die Begriffe "Anode" und "Kathode" benutzt, benennt man die Elektroden in der Regel entsprechend ihrer Entladefunktion. Die negative Elektrode in solchen Zellen ist also die Anode, die positive Elektrode die Kathode.

Ein elektrochemisches Energiespeicherelement kann genau eine elektrochemische Energiespeicherzelle umfassen. Es kann aber auch zwei oder mehr Zellen umfassen, die bevorzugt elektrisch in Reihe oder elektrisch parallel geschaltet sind.

Oftmals werden in Energiespeicherelementen die Elektroden und Separatoren in Form von Verbundkörpern bereitgestellt. Bei einem solchen Verbundkörper kann es sich um einen Zellenstapel (stack), aus mehreren Zellen handeln. Meist weist der Verbundkörper aber eine Struktur aus gewickelten Elektroden und Separatoren auf (Wickelverbundkörper).

Bei elektrochemischen Energiespeicherelementen sind zylindrische Bauformen weit verbreitet, wobei sich in der Regel die Elektroden als Bestandteil eines hohlzylindrischen Wickelverbundkörpers im Innenraum eines zylindrischen Gehäuses befinden, beispielsweise mit dem Formfaktor 21 x 70 (Durchmesser mal Höhe in mm). Insbesondere kann es sich hierbei um zylindrische Rundzellen handeln.

Für Anwendungen im Automobilbereich, für E-Bikes oder auch für andere Anwendungen mit hohem Energiebedarf, wie z.B. in elektrischen Werkzeugen, werden bevorzugt Lithium-Ionen-Zellen mit möglichst hoher Energiedichte eingesetzt, die gleichzeitig in der Lage sind, mit hohen Strömen beim Laden und Entladen belastet zu werden. Moderne Lithium-Ionen-Zellen dieses Formfaktors können eine Energiedichte im Bereich von 300 Wh/kg erreichen.

Problematisch an elektrochemischen Energiespeicherelementen mit sehr hoher Energiedichte ist, dass beispielsweise bei einem elektrischen Kurzschluss oder anderen Fehlgebrauchsbedingungen eine starke thermische Dynamik entstehen kann. Dadurch können die chemischen Materialien der Zelle, vor allem der Elektrolyt und die Aktivmaterialien, heftig reagieren und dabei schlagartig verdampfen, wodurch sogar das Gehäuse des Energiespeicherelements platzen kann. Ein derartiges thermisches Versagen ("thermal runaway") eines Energiespeicherelements kann ein Sicherheitsrisiko darstellen.

Sind mehrere Energiespeicherelemente zu einem Verbund zusammengefasst, kann das thermische Versagen eines Energiespeicherelements zudem sehr schnell auf benachbarte Energiespeicherelemente propagieren, so dass der Verbund insgesamt versagt und aufgrund der damit verbundenen Wärmeentwicklung ein erhebliches Sicherheitsrisiko darstellt.

Ferner ist bekannt, dass in zylindrischen Energiespeicherelementen der Einsatz von Aktivmaterialien problematisch ist, die eine merkliche Volumenänderungen, den sogenannten Volumenschub, beim Laden bzw. Entladen erfahren. Beispielsweise bei Si-haltigen Materialien ist dies besonders stark ausgeprägt. Auch ein kontinuierliches Wachstum der Feststoff-Elektrolyt-Grenzphase (Solid Electrolyte Interphase, SEI), einer Art Passivierungsschicht auf der Anode, kann hier zum Anschwellen ("swelling") der Elektrode beitragen. Die Volumenänderung umfasst damit sowohl reversible "Atmungsbeiträge" als auch kontinuierliches Wachstum. Daher werden auf Material-, Elektrolyt- und Elektrodenebene werden viele Anstrengungen unternommen, diese Volumeneffekte zu minimieren. Besonders in Wickelzellen kann es aber zum Kollaps des Wickels in Richtung dem Inneren des Wickels kommen. Um dies zu verhindern/reduzieren bzw. den Wickel zu stabilisieren, werden gemäß dem Stand der Technik beispielweise Röhrchen als Wickelkerne (auch Mandrels genannt) eingebracht. Die Wickelkerne werden entweder als Teil des Wickelprozesses bereits von Anfang an mit eingewickelt oder nachträglich eingeschoben. Die Wickelkerne können aus einem metallischen Material, z.B. Cu, bestehen, aber auch polymerbasierte Materialien kommen häufig zur Anwendung.

Ein Energiespeicherelement mit einem verbesserten Wickelkern ist beispielsweise aus der EP 3 945 617 A1 bekannt.

Bei Energiespeicherelementen, die einen Wickelkern aufweisen, erhöht sich im Falle des thermischen Versagens jedoch das Sicherheitsrisiko zusätzlich dadurch, dass der Wickelkern wie ein Projektil aus dem Inneren des Energiespeicherelements herausgeschossen werden kann.

### ZUSAMMENFASSUNG DER ERFINDUNG

Die Erfindung stellt sich demgegenüber die Aufgabe, ein verbessertes Energiespeicherelement bereitzustellen, das die genannten Probleme adressiert. Insbesondere soll das Energiespeicherelement hinsichtlich seiner Sicherheitseigenschaften verbessert sein.

Darüber hinaus soll ein Verbund aus mehreren Energiespeicherelementen mit verbesserten Sicherheitseigenschaften angegeben werden.

Diese Aufgabe wird durch das elektrochemische Energiespeicherelement mit den Merkmalen des Anspruchs 1 gelöst.

Das erfindungsgemäße Energiespeicherelement weist danach die folgenden Merkmale auf:
a) Das Energiespeicherelement weist einen hohlzylindrisch geformten Wickelverbundkörper auf, der eine spiralförmige Struktur aus mindestens zwei spiralförmig um eine Wickelachse gewickelten Elektrodenbändern und mindestens einem zwischen den Elektrodenbändern angeordneten Separatorband aufweist.
b) Der hohlzylindrisch geformte Wickelverbundkörper umfasst zwei endständige Stirnseiten, eine umlaufende äußere Verbundkörpermantelfläche und eine umlaufende innere Verbundkörpermantelfläche.
c) Die innere Verbundkörpermantelfläche definiert einen axial ausgerichteten Hohlraum im Zentrum des Wickelverbundkörpers.
d) In dem axial ausgerichteten Hohlraum ist ein Wickelkern mit im Wesentlichen zylindrischer oder hohlzylindrischer Form angeordnet, der über eine Außenumfangsfläche verfügt, die, vorzugsweise flächig, an der inneren Verbundkörpermantelfläche anliegt,
   Besonders zeichnet sich das Energiespeicherelement durch die folgenden Merkmale aus:
e) An zumindest einer der beiden endständigen Stirnseiten des Wickelverbundkörpers ist ein Ankerteil angeordnet, das mit dem Wickelkern verbunden ist.
f) Das Ankerteil kragt zumindest bereichsweise vom axialen Zentrum des Wickelverbundkörpers lateral über die Stirnseite des Wickelverbundkörpers aus.

Der Erfinder hat erkannt, dass durch ein Ankerteil, welches mit dem Wickelkern verbunden ist, verhindert wird, dass der Wickelkern im Falle eines thermischen Versagens des Energiespeicherelements als Projektil aus der Zelle katapultiert wird. Dadurch, dass das Ankerteil lateral über die Stirnseite des Wickelverbundkörpers hinweg auskragt, bilden der Wickelkern und der Wickelverbundkörper hinsichtlich des Auswerfens aus einem Gehäuseteil eine strukturelle Einheit. Aufgrund der vergrößerten Masse, die beim thermischen Versagen ausgeworfen wird, reduziert sich bei gleichem Auswurfdruck die Geschwindigkeit des ausgeworfenen Materials. Dies erhöht die Sicherheit des Energiespeicherelements, da der "Projektil-Effekt" entfällt. Vor allem wird aber der thermisch kritische Inhalt der Zelle aus der Ebene eines Zellverbundes (vgl. weitere untenstehende Erläuterungen) entfernt - idealerweise vollständig. Damit wird die Wahrscheinlichkeit für eine thermische Propagation im Zellverbund deutlich reduziert und die Sicherheit des Gesamtsystems maßgeblich verbessert.

Mit Auskragen über die Stirnseite des Wickelverbundkörpers ist hier im Wesentlichen eine radiale Erstreckung des Ankerteils über zumindest einen Bereich des Wickelverbundkörpers gemeint, wodurch zwischen dem Ankerteil und dem damit verbundenen Wickelkern einerseits sowie dem Wickelverbundkörper andererseits in axialer Richtung ein Formschluss entsteht. Das Ankerteil nimmt somit den Wickelverbundkörper mit der Bewegung des Wickelkerns mit bzw. verhindert eine unabhängige Bewegung beider Komponenten.

Das Merkmal "zylindrisch" wird hier nicht zwingend als kreiszylindrisch angesehen, sondern wird hier im allgemeinen mathematischen Sinne verstanden und kann somit auch Körper mit polygonaler Grundfläche, beispielsweise ein hexagonales Prisma, oder einer nichtkreiszylindrischen Grundfläche, beispielsweise einen gestauchten Flachwickel, umfassen.

Bevorzugt ist das erfindungsgemäße elektrochemische Energiespeicherelement eine elektrochemische Energiespeicherzelle.

In bevorzugten Ausführungsbeispielen zeichnet sich das Ankerteil durch mindestens eines der folgenden Merkmale a) bis e) aus.
a) Das Ankerteil und der Wickelkern sind materialeinstückig ausgebildet.

Dies hat insbesondere Vorteile bei der Herstellung. So können das Ankerteil und der Wickelkern als gemeinsames materialeinstückiges Bauteil, beispielsweise als Kunststoffspritzguss-Bauteil, gefertigt werden. Dieses wird dann in den Wickelverbundkörper ohne weitere Verbindungsprozessschritte eingebracht.

Das Ankerteil und der Wickelkern können aber auch zunächst getrennte Bauteile sein, die nachträglich miteinander verbunden werden. So kann beispielsweise der Wickelkern bereits in den Wickelverbundkörper eingesetzt sein und das Ankerteil nachträglich beispielsweise durch Ankleben oder Anschweißen mit dem Wickelkern verbunden werden. Auch formschlüssig ineinandergreifende mechanische Verbindungen zwischen Ankerteil und Wickelkern sind denkbar.
b) Das Ankerteil wird durch eine oder mehrere umgebogene Laschen des Wickelkerns ausgebildet.

Eine besonders effiziente Herstellungsart kann dadurch erreicht werden, dass man einen hohlzylindrischen Wickelkern mit etwas Überstand über die Stirnseite des Wickelverbundkörpers ausgestaltet. Der Wickelkern hat dabei im Bereich des Überstandes vom Ende des Wickelkerns her mindestens zwei, in etwa gegenüberliegende Längseinschnitte. Dadurch stehen zwei voneinander getrennte Laschen zur Verfügung, die nach dem Einbringen des Wickelkerns in den Wickelverbundkörper nach außen umgebogen werden, so dass diese über die Stirnseite des Wickelverbundkörpers auskragen. Die Länge der Einschnitte bestimmt dabei inwieweit das Ankerteil vom Zentrum des Wickelverbundkörpers aus über die Stirnseite auskragt.
c) Das Ankerteil hat zwei, drei oder vier, vorzugsweise sternförmig angeordnete Kragarme.

Werden mehrere Längseinschnitte vorgesehen, ergibt sich eine entsprechend höhere Anzahl von Laschen, so dass eine Vielzahl von Laschen über die Stirnseite des Wickelverbundkörpers auskragen. Das Ankerteil kann aber auch beispielsweise bei vier Kragarmen als Kreuzbauteil ausgebildet sein, dass mit dem Ankerteil verbunden wird. Die Anzahl der Kragarme ist somit unabhängig von der Herstellungsart. Im Übrigen können die Kragarme des Ankerteils eine beliebige Form annehmen. Denkbar sind also auch Ausgestaltungen mit blattförmigen Kragarmen.
d) Das Ankerteil ist scheibenförmig ausgebildet.

Ein scheibenförmiges Ankerteil hat den Vorteil, dass die Stirnseite möglichst flächig kontaktiert wird. Damit ergibt sich eine große Fläche für den Formschluss zwischen Ankerteil und Wickelverbundkörper.
e) Das Ankerteil erstreckt sich ausgehend vom axialen Zentrum des Wickelverbundkörpers bis zu einem Radius, der zwischen 10% und 100% des Radius des Wickelverbundkörpers, vorzugsweise zwischen 30% und 98%, insbesondere zwischen 80% und 95% liegt.

Um den notwendigen Formschluss zwischen dem Ankerteil und dem Wickelverbundkörper beim Auswurf aus einem Gehäuse zu gewährleisten, muss sich das Ankerteil nicht zwingend über den gesamten Radius der Stirnseite des Wickelverbundkörpers erstrecken. Es hat sich herausgestellt, dass es bereits ausreicht, wenn sich das Ankerteil nur bis zu 10% des Radius des Wickelverbundkörpers erstreckt. Idealerweise ist die Überdeckung jedoch größer, beispielsweise bis zu 60%, 80% oder 90% bzw. nahe bei der vollständigen Überdeckung. Die genannten Angaben zu den Radien sind unabhängig von der Form des Ankerteils, so dass ein scheibenförmiges Ankerteil oder aber die Kragarme oder Laschen des Ankerteils entsprechend weit über die Stirnfläche auskragen können. Im Übrigen ist es auch möglich, dass das Ankerteil sogar über den Radius des Wickelverbundkörpers hinausragt. Allerdings ist eine derartige Ausgestaltung hinsichtlich des Gesamtplatzbedarfs des Energiespeicherelements nicht vorteilhaft.

Nach einem weiteren bevorzugten Ausführungsbeispielen zeichnet sich das Ankerteil durch das folgende Merkmal aus.
a) Das Ankerteil ist ein elektrisch leitendes Kontaktelement, das an der Stirnseite des Wickelverbundkörpers, an welcher das Ankerteil angeordnet ist, in unmittelbarem Kontakt mit einem der Elektrodenbänder steht.

Insbesondere auf Strombelastbarkeit ausgelegte Energiespeicherelemente können ein Kontaktelement zum Kontaktieren des Elektrodenbandes an der Stirnseite des Wickelverbundkörpers aufweisen. Solche Energiespeicherelemente sind beispielsweise aus der WO 2021/239492 A1 bekannt. Dieses Kontaktelement kann auch als Ankerteil für den Wickelkern verwendet werden. Dazu muss das Kontaktelement nur mit dem Wickelkern verbunden sein oder im Laufe des Herstellungsprozesses mit diesem verbunden werden. Da das Kontaktelement in der Regel direkt am Rand des Elektrodenbands mit dem unbeschichteten metallischen Trägermaterial verschweißt wird, kann das Kontaktelement bevorzugt auch mit dem Wickelkern verschweißt oder mechanisch verbunden werden. Auf diese Weise kann die besonders bevorzugte Doppelfunktion des Bauteils als Kontaktelement zum Elektrodenband und als Ankerteil für den Wickelkern in einem Herstellungsschritt erzeugt werden.

Nach einem weiteren bevorzugten Ausführungsbeispielen zeichnet sich das Energiespeicherelement durch folgendes Merkmal aus.
a) Das Energiespeicherelement umfasst ein Gehäuse, das ein vorzugsweise metallisches, becherförmig ausgebildetes Gehäuseteil mit einem Boden und mit einer endständigen Öffnung, welche von einer Deckelbaugruppe geschlossen wird, umfasst.

Wie nachfolgend deutlich werden wird, ist die erfindungsgemäße Verankerung des Wickelkerns mit dem Wickelverbundkörper besonders bei Energiespeicherelementen vorteilhaft, die ein becherförmiges Gehäuseteil haben, das mit einer Deckelbaugruppe geschlossen wird. Denn bei einem solchen Gehäuse kann sich im Falle thermischen Versagens die Deckelbaugruppe öffnen und die Einheit aus Wickelkern, Ankerteil und Wickelverbundkörper ausgeworfen werden.

Bei einem solchen Gehäuse kann sich das Energiespeicherelement durch eines der folgenden Merkmale auszeichnen.
a) Der Wickelkern ist derart mit dem Boden des Gehäuseteils verbunden, dass der Boden das Ankerteil ausbildet.
   Wird der Wickelverbundkörper direkt mit einem elektrisch leitfähigen Boden verbunden, beispielsweise durch Verschweißen, so kann auch der Wickelkern direkt mit dem Boden verbunden werden. In diesem Fall bildet der Boden das Ankerteil aus, welches verhindert, dass der Wickelkern bei einem thermischen Versagen des Energiespeicherelements losgelöst vom Wickelverbundkörper aus dem Gehäuse ausgeworfen wird. Vorteilhaft an dieser Lösung ist, dass kein separates Bauteil notwendig ist.
b) Das Ankerteil ist mit dem Boden des Gehäuseteils verbunden.

Alternativ kann das Ankerteil als eigenständiges Bauteil mit dem Boden des Gehäuseteils verbunden sein. Dies ist beispielsweise in Verbindung mit einem oben genannten Merkmal, wonach das Ankerteil zugleich ein elektrisch leitendes Kontaktelement ist, besonders vorteilhaft. So ist es beispielsweise häufig üblich, das Kontaktelement, welches mit dem Kathodenstromkollektor verbunden ist, mit dem Boden des becherförmigen Gehäuseteils in Verbindung zu bringen. Dadurch fugiert das becherförmige Gehäuseteil als Pol des Energiespeicherelements. Bei einem solchen Ausführungsbeispiel kann dann das Kontaktelement durch Verschweißen mit dem Wickelkern zugleich als Ankerteil ausgebildet sein. Die Verbindung, beispielweise ebenfalls eine Schweißverbindung, wird dann so gewählt, dass sie sich leichter lösen lässt als die Verbindung mit dem Wickelkern, die idealerweise sehr stabil ist.

Nach einem weiteren Ausführungsbeispiel weist das Energiespeicherelement die folgenden zusätzlichen Merkmale auf.
a) Das Ankerteil weist Durchgangsöffnungen auf, über welche ein im Wickelverbundkörper entstehender Gasdruck sich in einen Raum zwischen Boden und Ankerteil entlasten kann, derart, dass
b) durch den Gasdruck das Ankerteil mitsamt dem Wickelkern und dem Wickelverbundkörper gegen die Deckelbaugruppe gedrückt wird.

Im Falle eines thermischen Versagens kann ein im Wickelverbundkörper entstehender Druck schnell in den Raum zwischen Ankerteil und Boden entweichen. Durch das Auswerfen von mitgeschlepptem Material und den Gasaustritt durch die Durchgangsöffnungen wird der Wickelverbundkörper wie eine Rakete beschleunigt und aus dem becherförmigen Gehäuseteil ausgeworfen, sobald die Deckelbaugruppe geöffnet ist. Die Geschwindigkeit des Wickelverbundkörpers beim Auswurf ist jedoch vergleichsweise gering, so dass hiervon keine weitergehende Gefahr ausgeht. Im Wesentlichen soll ein großer Teil der im Speicherelement enthaltenen Masse aus dem Gehäuse ausgeworfen werden, um eine thermische Propagation auf benachbarte Speicherelemente zu verhindern.

Nach einem vorteilhaften Ausführungsbeispiel kann das elektrochemische Energiespeicherelement mindestens eines der folgenden zusätzlichen Merkmale aufweisen.
a) die Deckelbaugruppe ist derart am becherförmigen Gehäuseteil, insbesondere über eine Crimp-Verschlusstechnik, befestigt, dass sich die Deckelbaugruppe öffnet, sobald der Wickelverbundkörper mit einem vorgegebenen Grenzdruck gegen die Deckelbaugruppe drückt.

Ist der Verschluss der Deckelbaugruppe am becherförmigen Gehäuseteil derart ausgestaltet, kann verhindert werden, dass das becherförmige Gehäuseteil platzt. Es handelt sich somit um eine kontrollierte Entlastung des Energiespeicherelements. Der Grenzdruck, bei welchem die Deckelbaugruppe sich öffnet, ist vorteilhaft höher gewählt als der Druck, bei dem ein sogenanntes Druckentlastungventil (PRV) nach dem Stand der Technik öffnet. Zudem sollte die geöffnete Deckelbaugruppe einen möglichst großen lichten Querschnitt freigeben.

Ein weiteres zusätzliches oder alternatives Merkmal ist daher das folgende Merkmal.
b) Die Deckelbaugruppe ist derart am becherförmigen Gehäuseteil, insbesondere über eine Crimp-Verschlusstechnik, befestigt, dass der lichte Querschnitt des becherförmigen Gehäuseteils radial jeweils nur um bis zum 6-fachen, vorzugsweise bis zum 2- bis 6-fachen, der Wandstärke des Gehäuseteils im Bereich unterhalb der Deckelbaugruppe gegenüber dem übrigen lichten Querschnitt reduziert wird.

Auf diese Weise ist ein möglichst großer Querschnitt frei, um den vollständigen Wickelverbundkörper aus dem becherförmigen Gehäuseteil auszuwerfen.

Bei der Herstellung eines Energiespeicherelements wird herkömmlich auf Bördelungsverfahren zurückgegriffen, um den becherförmigen Gehäuseteil mit der Deckelbaugruppe zu verschließen. Dabei wird bei bereits eingesetztem Wickelverbundkörper der freie Endabschnitt des becherförmigen Gehäuses radial nach innen über einen Bereich der Deckelbaugruppe umgebogen. Um zu vermeiden, dass der Wickelverbundkörper bei dem Bördelungsverfahren beschädigt wird, wird bei üblichen Energiespeicherelementen an dem becherförmigen Gehäuseteil oberhalb des Wickelverbundkörpers zunächst eine Werkzeug-Eingreifstruktur erzeugt. Die Werkzeug-Eingreifstruktur hat die Funktion, dass an das becherförmige Gehäuseteil ein Konterwerkzeug eines Bördelwerkzeugs angesetzt werden kann, während das Gehäuse durch das Bördelungsverfahren verschlossen wird. Das Konter-Werkzeug dabei die Deckelbaugruppe in axialer Richtung gegen die beim Bördelungsverfahren einwirkende Axialkraft und leitet diese Kraft ab, so dass der Wickel weitgehend frei von einer Krafteinwirkung bleibt. Üblicherweise ist hierfür zum Zeitpunkt des Verschließens eine in Umfangsrichtung vollständig umlaufende Sicke im becherförmigen Gehäuseteil vorgesehen, die auch nach der Herstellung verbleibt.

Da diese Sicke gegenüber der sonstigen Wand des Gehäusebechers radial in den Innenraum des Gehäuses hineinragt, steht der Bereich, in dem die Sicke ausgebildet ist, nicht als lichter Querschnitt für den Auswurf des Wickelverbundkörpers zur Verfügung, da dieser den Gehäusebecher radial voll ausfüllt.

Im Gegensatz zu dieser herkömmlichen Bördel-Verschlusstechnik erlaubt es die genannte Crimp-Verschlusstechnik, auf die üblicherweise notwendige Werkzeug-Eingreifstruktur für das Konterwerkzeug zu verzichten.

Für Details zur Crimp-Verschlusstechnik wird auf die Anmeldung EP 3 916 877 A1 der Anmelderin verwiesen.

Im Wesentlichen wird bei dieser Crimp-Verschlusstechnik nach dem Einschieben des Wickelverbundkörpers in den mit einer Stufe oder einem Konus versehenen becherförmigen Gehäuseteil durch Kalibrierung des Außendurchmessers des Gehäuseteils die Stufe bzw. der Konus in eine umlaufende Einbuchtung überführt. Auf dieser Einbuchtung wird dann die Deckelbaugruppe aufgelegt und nur noch ein oberer Überstand radial umgebogen, sprich gecrimpt. Ein axiales Kontern ist dabei nicht erforderlich.

Dadurch, dass der lichte Querschnitt des becherförmigen Gehäuseteils radial jeweils nur um bis zum 6-fachen der Wandstärke des Gehäuseteils im Bereich unterhalb der Deckelbaugruppe gegenüber dem übrigen lichten Querschnitt reduziert wird, kann im Falle eines thermischen Versagens des Energiespeicherelements der Wickelverbundkörper zusammen mit dem Wickelkern und dem Ankerteil aus dem Gehäuseteil ausgeworfen werden.

Als Bereich unterhalb der Deckelbaugruppe kann hier insbesondere der Bereich unmittelbar unterhalb der Deckelbaugruppe angesehen werden, wo diese am becherförmigen Gehäuseteil aufliegt.

Typische Wandstärken liegen im Bereich von 200 µm bis 350 µm bei Gehäusen des Typs 21700.

Der Bereich des umgelegten Bechers oberhalb der Deckelbaugruppe kann größer sein, um Haltekräfte zur Dichtung zu gewährleisten bzw. eine stirnseitige Kontaktierung des Speicherelements am umlaufenden Becherrand zu ermöglichen. Im Falle einer Öffnung der Zelle kann dieser außenliegende Bereich aber leichter verformen.

Die Verschlusstechnik muss dabei keine umlaufende Einbuchtung aufweisen, sondern kann auch nur einzelne Auflagepunkte für die Deckelbaugruppe haben. Die Angaben zur Eindringtiefe bzw. Reduzierung des lichten Querschnitts beziehen sich somit auf die jeweiligen Elemente. Bei einer umlaufenden Einbuchtung würde daher auch noch eine Verschlusstechnik untern den Schutzbereich fallen, die auf zwei gegenüberliegenden Seiten jeweils um die 6-fache Wandstärke in den inneren Querschnitt hineinragen würde.

Weitere Details zu Verschlusstechniken mit möglichst großem lichtem Querschnitt gehen aus der noch nicht veröffentlichten EP24194421.4 der Anmelderin hervor.

Das Gehäuse des Energiespeicherelements zeichnet sich ferner durch das folgende zusätzliche Merkmal aus.
a) Der Boden weist eine Sollbruchlinie auf, welche einen lösbaren Bodenbereich von einem fest mit dem übrigen Gehäuseteil verbundenen Bodenbereich abgrenzt.

Dies hat den Vorteil, dass man dort einen Stempel ansetzen kann, mit welchem der lösbare Bodenbereich eingedrückt werden kann. Dies kann zum manuellen Auswerfen des Wickelverbundkörpers und des Ankerteils während eines Recyclingverfahrens verwendet werden.

Die oben genannten Energiespeicherelemente können bevorzugt so ausgelegt sein, dass aufgrund des Ankerteils im Falle eines thermischen Versagens zwischen 10% und 100%, vorzugsweise zwischen 40% und 100%, insbesondere mehr als 60%, des Volumeninhalts des Energiespeicherelements aus dem Gehäuse ausgeworfen werden.

Hinsichtlich eines Verbunds von elektrochemischen Energiespeicherelementen kann die Sicherheit der obigen Energiespeicherelemente mit dem folgenden zusätzlichen Merkmal weiter erhöht werden:
a) Ein Zellverbinder verbindet Deckelbaugruppen mindestens zweier Energiespeicherelemente, wobei der Zellverbinder derart verformbar und/oder lösbar ist, dass sich die Deckelbaugruppe eines Energiespeicherelements ab einem vorgegeben Grenzdruck innerhalb des Energiespeicherelements öffnen lässt, während die Deckelbaugruppe des anderen Energiespeicherelements geschlossen bleibt.

Die Verformbarkeit bzw. die Lösbarkeit des Zellverbinders ist insofern vorteilhaft, dass dadurch aus einem einzelnen Energiespeicherelement, in welchem das thermische Versagen stattfindet, die Deckelbaugruppe trotz einer elektrisch notwendigen Verbindung zum Nachbarelement geöffnet werden kann, um den Wickelverbundkörper auszuwerfen.

Ein solcher Zellverbinder kann spezielle Biegestelle aufweisen, die beispielsweise durch Materialeinschnürungen realisiert werden. Oder die Verbindung des Zellverbinder ist nur gerade so stabil, dass die elektrische Leitfähigkeit gewährleistet ist, aber beim Erreichen des Grenzdrucks sich die Verbindung, beispielsweise ein Schweißpunkt, löst.

Ein Verfahren zum Recyclen der oben genannten elektrochemischen Energiespeicherelemente weist vorzugsweise die folgenden Merkmale auf.
a) Herausdrücken des Wickelverbundkörpers aus einem Gehäuseteil einschließlich des Wickelkerns durch Eindrücken eines Stempels in den Boden des Energiespeicherelements.
b) Getrenntes Weiterverarbeiten von Gehäuseteil und Wickelverbundkörper.

Ein solches manuelles Auswerfen des Wickelverbundkörpers erlaubt ein einfacheres und sichereres Recycling von Energiespeicherelementen. Insbesondere kann der Stempel den lösbaren Bodenbereich eindrücken, der von einer Sollbruchlinie umrandet wird.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine schematische Skizze eines noch ungewickelten Elektrodenbandes, hier der Anode;
- Figur 2: eine schematische Skizze eines noch ungewickelten Elektrodenbandes, hier der Kathode;
- Figur 3: eine schematische Skizze einer versetzten Anordnung von Anode, Separator und Kathode im ungewickelten Zustand;
- Figur 4: eine perspektivische Ansicht eines Wickelverbundkörpers mit überstehendem Anodenstromkollektor oben und überstehendem Kathodenstromkollektor unten sowie einem Wickelkern im Inneren;
- Figur 5: eine perspektivische Ansicht eines Wickelverbundkörpers einschließlich Wickelkern und einem stirnseitigen Ankerteil nach einem ersten Ausführungsbeispiel;
- Figur 6: einen Längsschnitt durch den Wickelkern und das mit diesem verbundene Ankerteil aus Fig. 5;
- Figur 7: eine Draufsicht von unten auf das Ankerteil aus den Figuren 5 und 6;
- Figur 8: eine perspektivische Ansicht eines Wickelverbundkörpers einschließlich Wickelkern und einem stirnseitigen Ankerteil nach einem zweiten Ausführungsbeispiel;
- Figur 9: einen Längsschnitt durch den Wickelkern und das mit diesem verbundene Ankerteil aus Fig. 5;
- Figur 10: eine Draufsicht von unten auf das Ankerteil aus den Figuren 8 und 9;
- Figur 11: einen Längsschnitt durch eine elektrochemische Energiespeicherzelle mit einem geschlossenen Gehäuse und eingesetztem Wickelverbundkörper;
- Figur 12: einen Längsschnitt durch eine elektrochemische Energiespeicherzelle in einem Zustand, bei dem sich eine Deckelbaugruppe vom Gehäuse gelöst hat und der Wickelverbundkörper mitsamt Wickelkern und Ankerteil ausgeworfen wird;
- Figur 13: einen Schnitt durch einen Zellverbund mit mehreren erfindungsgemäßen Energiespeicherzellen, wobei eine der Energiespeicherzellen ausgeworfen wird;
- Figur 14: eine Aufsicht auf einen Zellverbinder, der zwei Energiespeicherzellen des Zellverbunds elektrisch miteinander verbindet;
- Figur 15: einen Schnitt durch einen Zellverbund während eines Demontageschrittes während des Recyclings der Energiespeicherzellen.

### BESCHREIBUNG BEVORZUGTER AUSFÜHRUNGSBEISPIELE

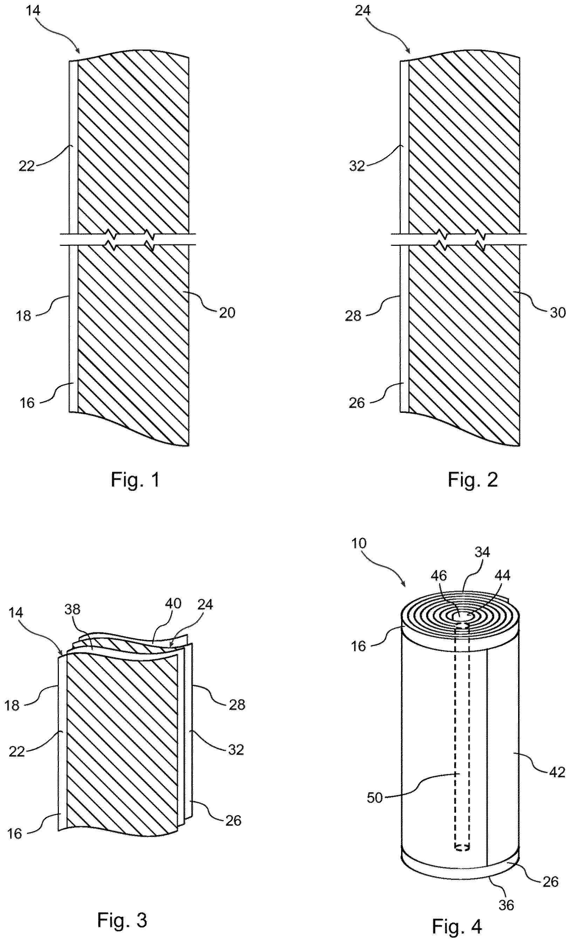

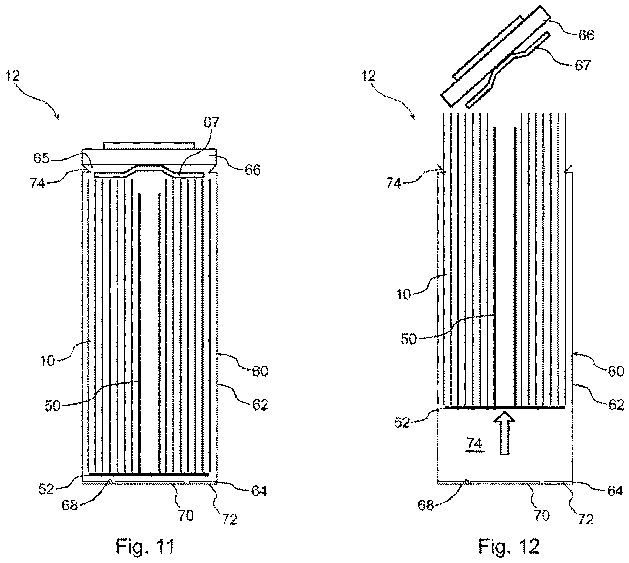

Die Figuren 1 bis 4 veranschaulichen den Aufbau eines Wickelverbundkörpers 10, der Bestandteil einer Energiespeicherzelle 12 (vgl. Figuren 11 bis 15) sein kann. Da die Beschreibung nur Ausführungsbeispiele mit nur einer elektrochemischen Energiespeicherzelle als erfindungsgemäßes Energiespeicherelement zeigen, wird im Folgenden stets der Begriff der Energiespeicherzelle verwendet. Wie oben bereits erläutert, sind aber auch Varianten mit mehreren zu einem erfindungsgemäßen Energiespeicherelement verbundenen Energiespeicherzellen denkbar.

Der Wickelverbundkörper 10 umfasst die in Fig. 1 gezeigte, bandförmige Anode 14 mit dem bandförmigen Anodenstromkollektor 16, der einen ersten Längsrand 18 aufweist. Bei dem Anodenstromkollektor 16 handelt es sich um eine Folie aus Kupfer oder Nickel. Im Falle von Anoden mit höheren Potentialen (> 1V vs. Li/Li+) oder bei Na-Ionen Zellen kann auch Aluminium eingesetzt werden. Die Folie umfasst einen bandförmigen Hauptbereich, der mit einer Schicht aus negativem Elektrodenmaterial 20 beladen ist, sowie einen freien Randstreifen 22, der sich entlang des Längsrands 18 erstreckt und der nicht mit dem Elektrodenmaterial 20 beladen ist. Der Randstreifen 22 kann teilweise mit einem Material zur elektrischen Isolation beschichtet sein.

Weiterhin umfasst der Wickelverbundkörper 10 die in Fig. 2 gezeigte, bandförmige Kathode 24 mit dem bandförmigen Kathodenstromkollektor 26, der einen zweiten Längsrand 28 aufweist. Bei dem Kathodenstromkollektor 26 handelt es sich um eine Aluminiumfolie. Er umfasst einen bandförmigen Hauptbereich, der mit einer Schicht aus positivem Elektrodenmaterial 30 beladen ist, sowie einen freien Randstreifen 32, der sich entlang des Längsrands 28 erstreckt und der nicht mit dem Elektrodenmaterial 30 beladen ist.

Beide Elektroden, die Anode 14 und die Kathode 24, sind zunächst einzeln im ungewickelten Zustand dargestellt.

Die Anode 14 und die Kathode 24 sind innerhalb des Wickelverbundkörpers 10 derart versetzt zueinander angeordnet, dass der erste Längsrand 18 des Anodenstromkollektors 16 aus der ersten endständigen Stirnseite 34 und der zweite Längsrand 28 des Kathodenstromkollektors 26 aus der zweiten endständigen Stirnseite 36 des Wickelverbundkörper 10 austritt. Die versetzte Anordnung geht aus Fig. 3 hervor.

Dort sind auch die zwei bandförmigen Separatoren 38 und 40 dargestellt, die im Wickelverbundkörper 10 die Anode 14 und die Kathode 24 voneinander trennen. Man spricht daher in diesem Zusammenhang auch oft von einem Elektroden-Separator-Verbund. Die Separatorbänder 38 und 40 können ein beliebiges Material zur elektrischen Trennung der Elektroden umfassen. Zudem können sie auch als eine Art Isolationsschicht direkt auf die Elektroden aufgebracht sein. Hierfür sind elektrisch isolierende, ionenleitende Materialien wie ionenleitende Polymere denkbar. Im Hinblick auf den Schutzumfang des Ansprüche werden daher auch derartige Isolationsschichten als Separatorband aufgefasst.

In Fig. 4 ist der Wickelverbundkörper 10 in gewickelter Form dargestellt, wie er in einer Energiespeicherzelle 12 gemäß einer der Figuren 11 bis 15 zum Einsatz kommen kann. Die aus den Stirnseiten 34 und 36 austretenden Anodenstrom- und Kathodenstromkollektoren 16 und 26 sind gut zu erkennen.

Häufig wird der Wickelverbundkörper 10 noch von einem Wickelmantel 42 umschlossen, beispielsweise von einer Kunststofffolie. Alternativ können auch lokal aufgebrachte, streifenförmige Klebebänder eingesetzt werden oder die Separatorbänder werden in der äußersten Windung direkt miteinander verklebt.

Wie man in Fig. 4 weiterhin erkennen kann, ist der Wickelverbundkörper 10 hohlzylindrisch geformt und hat eine umlaufende äußere Verbundkörpermantelfläche, entlang welcher im Wesentlichen der Wickelmantel 42 verläuft, und eine umlaufende innere Verbundkörpermantelfläche 44, die einen axial ausgerichteten Hohlraum 46 im Zentrum des Wickelverbundkörpers 10 definiert.

In dem Hohlraum 46 ist ein Wickelkern 50 angeordnet. Dieser dient dazu, den Wickelverbundkörper 10 von innen zu stützen. Es wird dadurch verhindert, dass der Hohlraum 46 durch den Volumenschub beim Laden und Entladen zusammenfällt. Der Wickelkern 50 kann aus Metall aber auch aus Polymermaterial gebildet sein. Je nach Herstellungsprozess kann der Wickelkern 50 vor dem Wickeln oder auch nach dem Wickeln des Wickelverbundkörpers 10 in dessen Inneren platziert werden.

Meist hat der Hohlraum 46 eine hohlzylindrische Form mit kreisförmigem Querschnitt. Je nach Geometrie des Wickelkerns 50 sind aber auch andere Hohlzylinder- oder Vollzylinderformen, wie beispielweise eine hexagonal prismatische Form denkbar. Häufig ist der Wickelkern 50 als längsgeschlitztes kreiszylindrisches Rohr ausgebildet, so dass der Wickelkern 50 selbst dem Volumenschub des Elektro-Separator-Verbunds bis zu einem gewissen Grad nachgeben kann.

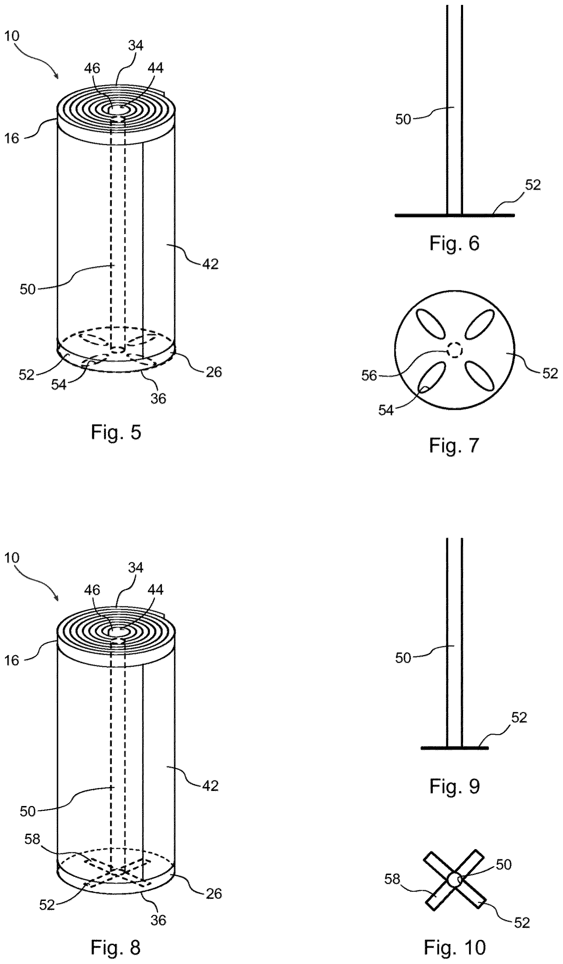

Aus den Figuren 5 bis 7 ist nun ein erstes Ausführungsbeispiel der erfindungsgemäßen Weiterbildung ersichtlich.

Die Figuren 6 und 7 zeigen im Schnitt bzw. in einer Draufsicht den Wickelkern 50 sowie ein Ankerteil 52, welches an der Stirnseite mit dem Wickelkern 50 fest verbunden ist.

Das Ankerteil 52 ist im hier dargestellten Ausführungsbeispiel scheibenförmig und weist vier Durchgangsöffnungen 54 auf. Die Durchgangsöffnungen 54 sind hier oval, können jedoch auch andere Formen haben und deren Anzahl kann beliebig variieren.

Sowohl der Wickelkern 50 als auch das Ankerteil 52 sind in diesem Ausführungsbeispiels metallisch und damit insbesondere elektrisch leitfähig ausgeführt. Der Wickelkern 50 und das Ankerteil 52 sind entlang der in Fig. 7 gestrichelt dargestellten Schweißnaht 56 fest miteinander verbunden.

In Fig. 5 ist der Wickelverbundkörper 10 gezeigt, wobei von der Stirnseite 36 her, auf welcher der Kathodenstromkollektor 26 übersteht, der Wickelkern 50 in den Hohlraum 46 so eingesetzt ist, dass das Ankerteil 52 über die Stirnseite 36 des Wickelverbundkörpers 10 auskragt. Zwischen dem Wickelkern 50 und dem Ankerteil 52 einerseits und dem Wickelverbundkörper 10 andererseits bildet sich somit ein Formschluss gegenüber einer Bewegung des Wickelkerns 50 in axialer Richtung zur Stirnseite 34 hin aus. Dementsprechend kann sich der Wickelkern 50 nur zusammen mit dem Wickelverbundkörper 10 axial (in der Figur 5 nach oben) bewegen.

Aufgrund dessen, dass das Ankerteil 52 elektrisch leitfähig ist, wird das Ankerteil 52 zugleich als Kontaktelement zu dem Kathodenstromkollektor 26 verwendet, an welchem das Ankerteil 52 anliegt. Zur besseren Kontaktierung ist das Ankerteil 52 zumindest bereichsweise mit dem Kathodenstromkollektor 26 verschweißt. Das Ankerteil 52 seinerseits mit dem Wickelkern 50 verschweißt ist, sorgt die Verschweißung zu einer noch innigeren Verbindung zwischen Wickelkern 50 und Wickelverbundkörper 10, da damit auch eine Bewegung in Richtung der Stirnseite 36, an welcher das Ankerteil 52 angeordnet ist, nur gemeinsam erfolgen kann.

In den Figuren 8 bis 10 ist ein weiteres Ausführungsbeispiel gezeigt. Dort wurde das Ankerteil 52 dadurch ausgebildet, dass an einem Ende eines Röhrchens stirnseitig vier Längsschnitte eingeschnitten wurden. Die dadurch entstandenen Laschen wurden dann jeweils um 90° umgebogen, so dass diese, wie aus den Figuren 8 bis 10 hervorgeht, sternförmig radial auskragende Kragarme 58 bilden, die das Ankerteil 52 definieren. Das Ankerteil 52 und der Wickelkern 50 sind damit materialeinstückig und auf einfache Weise gefertigt. Auch hier können die auskragenden Kragarme über ihre Länge mit der Kollektorfolie verschweißt werden, um ein Kontaktelement auszubilden, das möglichst weite Bereiche der Kollektorfolie elektrisch verbindet.

Auch hier erkennt man in Fig. 8 wie das Ankerteil 52 am Wickelverbundkörper 10 anliegt.

In Fig. 11 ist eine elektrochemische Energiespeicherzelle 12 mit einem Gehäuse 60 gezeigt, in welchem der Wickelverbundkörper 10 samt Wickelkern 50 und Ankerteil 52 angeordnet ist.

Das Gehäuse 60 umfasst ein becherförmiges Gehäuseteil 62 mit einem Boden 64, dessen endständige Öffnung 65 von einer Deckelbaugruppe 66 geschlossen wird. Die Deckelbaugruppe 66 umfasst auch das obere Kontaktelement 67, beispielsweise aus Aluminium, das den Anodenstromkollektor 16 an der oberen Wickelstirnseite mit dem Rest der Deckelbaugruppe 66 verbindet.

Der Boden 64 weist eine Sollbruchlinie 68 auf, welche einen lösbaren Bodenbereich 70 von einem fest mit dem übrigen Gehäuseteil 62 verbundenen Bodenbereich 72 abgrenzt.

Die Deckelbaugruppe 66 wird bei der Herstellung der Energiespeicherzelle 12 an dem Gehäuseteil 62 über eine neuartigen Crimp-Verschlusstechnik befestigt. Im Gegensatz zum klassischen Bördeln des becherförmigen Gehäuseteils 62, um die Deckelbaugruppe 66 zu verschließen, verengt die Crimp-Verschlusstechnik den lichten Querschnitt des becherförmigen Gehäuseteils 62 deutlich weniger.

Für Details zur Crimp-Verschlusstechnik wird auf die parallele Anmeldung EP 3 916 877 A1 der Anmelderin verwiesen.

Im Wesentlichen wird bei der Crimp-Verschlusstechnik nach dem Einschieben des Wickelverbundkörpers 10 in den mit einer Stufe oder einem Konus versehenen becherförmigen Gehäuseteil 62 durch Kalibrierung des Außendurchmessers des Gehäuseteils 62 die Stufe bzw. der Konus in eine umlaufende Einbuchtung 74 überführt. Auf dieser Einbuchtung 74 wird dann die Deckelbaugruppe 66 aufgelegt und nur noch ein oberer Überstand radial umgebogen, sprich gecrimpt.

Die Einbuchtung 74 umläuft die Seitenwand des Gehäuseteils 62 ringförmig, weist aber nicht die Tiefe auf, die eine zum Bördeln dienende Einbuchtung haben müsste, in welche ein Bördelwerkzeug eingreifen würde, um die Deckelbaugruppe 66 in axialer Richtung zu kontern.

Die Einbuchtung 74 beim vorliegenden Ausführungsbeispiel hat eine radiale Tiefe von etwa der 2-fachen bis etwa der 6-fachen Wandstärke des becherförmigen Gehäusebauteils 62 im Bereich der Einbuchtung 74. Damit verbleibt ein großer lichter Querschnitt im becherförmigen Gehäuseteil 62.

Die erfindungsgemäße Energiespeicherzelle 12 arbeitet wie folgt:
In Figur 12 ist die Situation eines thermischen Versagens der Energiespeicherzelle 12 gezeigt.

Durch das thermische Versagen, beispielsweise verursacht durch einen inneren Kurzschluss, hat sich im dem geschlossenen Gehäuse 60 ein Überdruck aufgebaut. Dabei ist der Druck sehr schnell angestiegen, so dass ein klassischerweise in der Deckelbaugruppe 66 angeordnetes Druckentlastungventil ("pressure relieve valve", PRV) nicht ausgereicht hat, um die Gefahrensituation zu entschärften.

Aufgrund des Überdrucks wird, wie in Figur 12 ersichtlich, die Deckelbaugruppe 66 inklusive des oberen Kontaktelements 67 abgesprengt und durch die dabei entstehende Dynamik strömt der Überdruck auch nach unten durch die Durchgangsöffnungen 54 in den Bereich 76 unterhalb des Ankerteils 52. Dadurch wird die gesamte Einheit von Wickelverbundkörper 10, Wickelkern 50 und Ankerteil 52 aus dem becherförmigen Gehäuseteil 62 ausgeworfen.

Alternativ kann der Auswurf auch auf eine Art erfolgen, bei der sich die Deckelbaugruppe 66 und/oder das obere Kontaktelement 67 nicht vom Wickel trennen. In diesem Fall kommt es lediglich zu einer Öffnung des Zellverschlusses im Bereich der Crimpung. Generell sind unterschiedliche Öffnungsvarianten sowie Mischungen davon möglich und die hier verwendeten, vereinfachten Darstellungen können das real auftretende Versagensbild nicht hinreichend wiedergeben.

Der axiale Formschluss zwischen Ankerteil 52 und Wickelverbundkörper 10 verhindert dabei, dass der Wickelkern 50 als einzelnes Projektil mit seiner geringeren Masse sehr schnell aus dem Gehäuseteil 62 ausgeworfen wird. Stattdessen weist die ausgeworfene Einheit eine demgegenüber größere Masse auf und hat damit eine deutlich geringere Geschwindigkeit, wodurch sich die Sicherheit der Energiespeicherzelle 12 erhöht. Vor allem aber wird ein größerer Teil der Zellmasse ausgeworfen und so die Wahrscheinlichkeit für eine thermische Propagation auf Zellverbundebene signifikant reduziert.

Zudem erlaubt die geringere radiale Tiefe der Einbuchtung 74 der Crimp-Verschlusstechnik, dass sich der Wickelverbundkörper 10 freier aus dem becherförmigen Gehäuseteil 62 bewegen kann als dies bei einer klassischen Bördel-Verschlusstechnik der Fall wäre. Damit wird der Druck bzw. die im System vorhandene Energie schnell axial aus dem Gehäuseteil 62 herausbewegt.

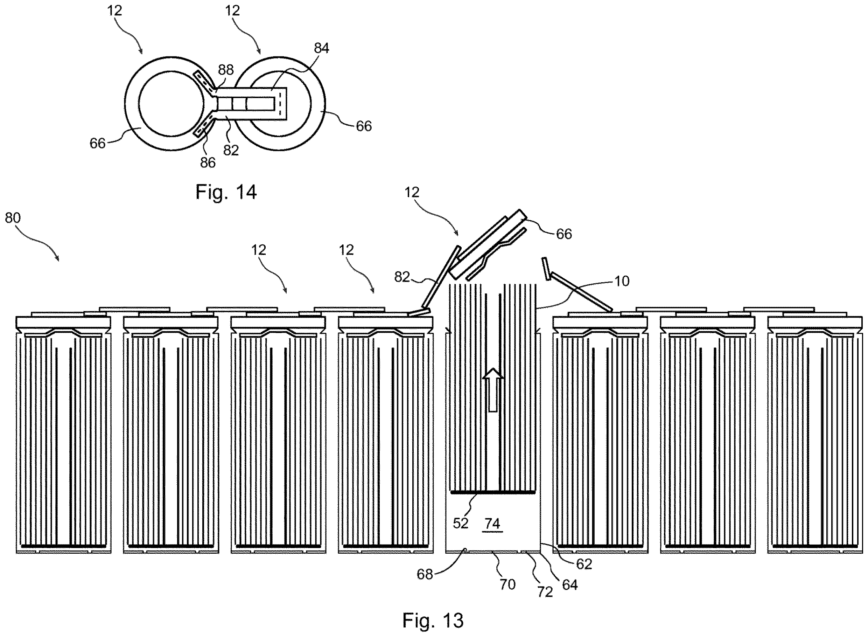

In Figur 13 ist die erfindungsgemäße Energiespeicherzelle 12 in einem Zellverbund 80 aus mehreren lateral nebeneinander angeordneten Energiespeicherzellen 12 gezeigt.

Die Energiespeicherzellen 12 des Zellverbunds 80 sind über einen Zellverbinder 82 elektrisch miteinander verbunden. Dabei sind hier jeweils die Deckelbaugruppen 66 zweier Energiespeicherzellen 12 über einen Zellverbinder 82 verbunden.

Der Zellverbinder 82 ist dabei so ausgestaltet, dass er eine Verbiegung zulässt oder sich derart löst, dass die Deckelbaugruppe 66 einer Energiespeicherzelle 12, bei der ein thermisches Versagen auftritt, sich vom becherförmigen Gehäuseteil 62 lösen kann.

Eine mögliche Ausgestaltung eines solchen Zellverbinders 82 ist in Figur 14 gezeigt. Dabei weist der Zellverbinder 82 eine förmige Basis 84 auf, deren Schenkel in schräg nach außen weisende Kontaktfahnen 86 übergehen. Eine Einschnürung 88 zwischen den Schenkeln und den Kontaktfahnen 86 sorgen dabei für eine ausreichende Verformbarkeit in axialer Richtung.

Durch den flexiblen Zellverbinder 82 kann sich, wie oben beschrieben, im Falle des thermischen Versagens einer Energiespeicherzelle 12 des Zellverbunds 80 deren Deckelbaugruppe 66 lösen und der Wickelverbundkörper 10 wird ausgeworfen. Dadurch, dass sich das Gehäuse 60 in axialer Richtung öffnet und die problematische Last des versagenden Wickelverbundkörpers 10 aufgrund des Ankerteils mit ausgeworfen wird, weiten sich die thermischen Probleme nicht oder zumindest in geringerem Maße auf benachbarte Energiespeicherzellen 12 aus.

Die erfindungsgemäße Energiespeicherzelle 12 erhöht somit vor allem auch im Zellverbund 80 die Sicherheit.

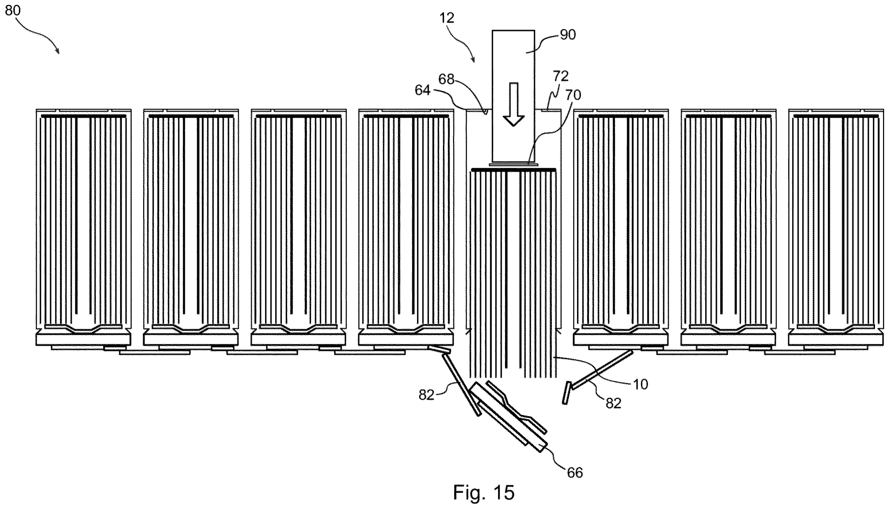

In Figur 15 ist ein Schritt im Recyclingprozess des Zellverbunds 80 gezeigt. Der Zellverbund 80 ist dabei der einfacheren Entleerung halber auf dem Kopf stehend gezeigt.

Um den Wickelverbundkörper 10 aus dem Gehäuse 60 der Energiespeicherzelle 12 zu entnehmen, wird mit Hilfe eines Stempels 90 auf den lösbaren Bodenbereich 70 gedrückt. Dieser löst sich bei ausreichender Kraft entlang der Sollbruchlinie 68 vom übrigen Bodenbereich 72. Zugleich wird die Deckelbaugruppe 66 freigegeben, da die Crimp-Verschlusstechnik so ausgebildet ist, dass sie sich ab einer vorgegebenen Kraft bzw. ab einem vorgegebenen Druck öffnet. Der Wickelverbundkörper 10 kann so auf einfache Weise aus dem Gehäuse 60 herausgedrückt werden.

Anschließend werden der Wickelverbundkörper 10 und das Gehäuse 60 getrennt weiteren Recyclingschritten zugeführt.

## Patentansprüche

1. Elektrochemisches Energiespeicherelement (12) mit den Merkmalen
a) das Energiespeicherelement (12) weist einen hohlzylindrisch geformten Wickelverbundkörper (10) auf, der eine spiralförmige Struktur aus mindestens zwei spiralförmig um eine Wickelachse gewickelten Elektrodenbändern (14, 24) und mindestens einem zwischen den Elektrodenbändern (14, 24) angeordneten Separatorband (38, 40) aufweist,
b) der hohlzylindrisch geformte Wickelverbundkörper (10) umfasst zwei endständige Stirnseiten (34, 36), eine umlaufende äußere Verbundkörpermantelfläche (42) und eine umlaufende innere Verbundkörpermantelfläche (44),
c) die innere Verbundkörpermantelfläche (44) definiert einen axial ausgerichteten Hohlraum (46) im Zentrum des Wickelverbundkörpers (10), und
d) in dem axial ausgerichteten Hohlraum (46) ist ein Wickelkern (50) mit im Wesentlichen zylindrischer oder hohlzylindrischer Form angeordnet, der über eine Außenumfangsfläche verfügt, die vorzugsweise flächig an der inneren Verbundkörpermantelfläche (46) anliegt,
sowie den kennzeichnenden Merkmalen
e) an zumindest einer der beiden endständigen Stirnseiten (36) des Wickelverbundkörpers (10) ist ein Ankerteil (52) angeordnet, das mit dem Wickelkern (50) verbunden ist,
f) das Ankerteil (52) kragt zumindest bereichsweise vom axialen Zentrum des Wickelverbundkörpers (10) lateral über die Stirnseite (36) des Wickelverbundkörpers (10) aus.

2. Elektrochemisches Energiespeicherelement nach Anspruch 1 mit mindestens einem der folgenden zusätzlichen Merkmale
a) das Ankerteil (52) und der Wickelkern (50) sind materialeinstückig ausgebildet,
b) das Ankerteil (52) wird durch eine oder mehrere umgebogene Laschen (58) des Wickelkerns (50) ausgebildet,
c) das Ankerteil (52) hat zwei, drei oder vier, vorzugsweise sternförmig angeordnete Kragarme (58),
d) das Ankerteil (52) ist scheibenförmig ausgebildet,
e) das Ankerteil (52) erstreckt sich ausgehend vom axialen Zentrum des Wickelverbundkörpers (10) bis zu einem Radius, der zwischen 10% und 100% des Radius des Wickelverbundkörpers (10), vorzugsweise zwischen 30% und 98%, insbesondere zwischen 80% und 95% liegt.

3. Elektrochemisches Energiespeicherelement nach einem der vorhergehenden Ansprüche mit dem folgenden zusätzlichen Merkmale
a) das Ankerteil (52) ist ein elektrisch leitendes Kontaktelement, das an der Stirnseite (36) des Wickelverbundkörpers (10), an welcher das Ankerteil (52) angeordnet ist, in unmittelbarem Kontakt mit einem der Elektrodenbänder (24) steht.

4. Elektrochemisches Energiespeicherelement nach einem der vorhergehenden Ansprüche mit folgenden zusätzlichen Merkmalen
a) das Energiespeicherelement (12) umfasst ein Gehäuse (60), das ein vorzugsweise metallisches, becherförmig ausgebildetes Gehäuseteil (62) mit einem Boden (64) und mit einer endständigen Öffnung (65), welche von einer Deckelbaugruppe (66) geschlossen wird, umfasst.

5. Elektrochemisches Energiespeicherelement nach Anspruch 4 mit einem der folgenden zusätzlichen Merkmale
a) der Wickelkern (50) ist derart mit dem Boden (64) des Gehäuseteils verbunden, dass der Boden (64) das Ankerteil (52) ausbildet, oder
b) das Ankerteil (52) ist mit dem Boden (64) des Gehäuseteils (62) verbunden.

6. Elektrochemisches Energiespeicherelement nach einem der Ansprüche 4 bis 5 mit den folgenden zusätzlichen Merkmalen
a) das Ankerteil (52) weist Durchgangsöffnungen (54) auf, über welche ein im Wickelverbundkörper (10) entstehender Gasdruck sich in einen Raum (74) zwischen Boden (64) und Ankerteil (52) entlasten kann, derart, dass
b) durch den Gasdruck das Ankerteil (52) mitsamt dem Wickelkern (50) und dem Wickelverbundkörper (10) gegen die Deckelbaugruppe (66) gedrückt wird.

7. Elektrochemisches Energiespeicherelement nach einem der Ansprüche 4 bis 6 mit mindestens einem der folgenden zusätzlichen Merkmale
a) die Deckelbaugruppe (66) ist derart am becherförmigen Gehäuseteil (62), insbesondere über eine Crimp-Verschlusstechnik, befestigt, dass sich der Verschluss der Deckelbaugruppe (66) öffnet, sobald der Innendruck und/oder der Wickelverbundkörper (10) mit einem vorgegebenen Grenzdruck gegen die Deckelbaugruppe (66) drückt, und/oder
b) die Deckelbaugruppe (66) ist derart am becherförmigen Gehäuseteil (62), insbesondere über eine Crimp-Verschlusstechnik, befestigt, dass der lichte Querschnitt des becherförmigen Gehäuseteils (62) radial jeweils nur um bis zum 6-fachen der Wandstärke des Gehäuseteils (62) im Bereich unterhalb der Deckelbaugruppe (66) gegenüber dem übrigen lichten Querschnitt reduziert ist.

8. Elektrochemisches Energiespeicherelement nach Anspruch 4 bis 7 mit folgenden zusätzlichen Merkmalen
a) der Boden (64) weist eine Sollbruchlinie (68) auf, welche einen lösbaren Bodenbereich (70) von einem fest mit dem übrigen Gehäuseteil (62) verbundenen Bodenbereich (72) abgrenzt.

9. Zellverbund (80) von elektrochemischen Energiespeicherelementen (12) nach einem der vorhergehenden Ansprüche mit den folgenden zusätzlichen Merkmalen
a) ein Zellverbinder (82) verbindet Deckelbaugruppen (66) mindestens zweier Energiespeicherelemente (12), wobei der Zellverbinder (82) derart verformbar und/oder lösbar ist, dass sich die Deckelbaugruppe (66) eines Energiespeicherelements (12) ab einem vorgegeben Grenzdruck innerhalb des Energiespeicherelements (12) öffnen lässt, während die Deckelbaugruppe (66) der anderen Energiespeicherelemente (12) geschlossen bleibt.

10. Verfahren zum Recyclen von elektrochemischen Energiespeicherelementen (12) nach einem der Ansprüche 1 bis 8 mit folgenden Merkmalen
a) Herausdrücken des Wickelverbundkörpers (10) aus einem Gehäuseteil (62) einschließlich des Wickelkerns (50) durch Eindrücken eines Stempels (90) in den Boden der Energiespeicherelemente (12);
b) Getrenntes Weiterverarbeiten von Gehäuseteil (62) und Wickelverbundkörper (10).
